# FASCICULE DE BREVET EUROPEEN

(11) **EP 3 369 625 B1**
(45) Date de publication et mention de la délivrance du brevet: **17.07.2019**
(21) Numéro de dépôt: 18158697.5
(22) Date de dépôt: 26.02.2018
(51) Int. Cl.: B60R 5/04

(54) **TABLETTE ARRIÈRE MODULABLE POUR VÉHICULE AUTOMOBILE**
MODULARE HINTERE ABLAGE FÜR KRAFTFAHRZEUG
MODULAR REAR SHELF FOR A MOTOR VEHICLE

(30) Priorité: 03.03.2017 FR 1751733
(43) Date de publication de la demande: 05.09.2018
(73) Titulaire: PSA Automobiles SA, 78300 Poissy (FR)
(72) Inventeur: GAUTHIER, Jean-Pierre, 94800 Villejuif (FR); ROUSSEAU, Frédéric, 28320 Gallardon (FR); MARCEL, Valérie, 55150 Brandeville (FR)

(56) Documents cités:
- CH-A- 295 870
- FR-A1- 2 991 252
- US-A1- 2016 059 788

## Description

### Domaine de l'invention

La présente invention concerne une tablette arrière de masquage du chargement d'un coffre arrière de véhicule automobile.

### Arrière-plan de l'invention

Les véhicules automobiles dotés d'un hayon de coffre comportent classiquement une tablette arrière comprenant un panneau rigide monté pivotante par son extrémité avant (placée à proximité des dossiers de la banquette arrière) par rapport à deux parties latérales opposées de la structure ou caisse du véhicule et selon un axe transversal.

Une telle tablette comprend également deux cordons souples, appelés limiteurs de débattement, dont une première extrémité est solidarisée au panneau et dont la seconde extrémité forme une boucle permettant de la fixer de manière amovible au hayon de coffre.

Ainsi, lors de l'ouverture de ce hayon, le panneau est automatiquement entraîné à pivotement vers le haut de sorte à faciliter l'accès au coffre.

Les tablettes de ce type sont en outre généralement montées amovibles pour augmenter le volume de chargement, notamment lorsque les dossiers de la banquette arrière sont rabattus à l'horizontale.

De par ses dimensions et la rigidité de son panneau, il n'est pas toutefois pas aisé pour l'utilisateur de ranger cette tablette dans le véhicule lorsqu'elle a été retirée.

Lorsque les dossiers de la banquette n'ont pas été rabattus, celui-ci a tendance à disposer la tablette sur l'assise de cette banquette, mais cette dernière devient dès lors inutilisable.

Si les sièges ont été rabattus, l'utilisateur essaye généralement de la caser à la verticale contre l'un des parties latérales de la structure du véhicule, mais cela a pour conséquence de réduire sensiblement le volume de chargement du coffre et d'entrainer des risques de déformation de cette tablette.

Afin de palier à cet inconvénient, on connaît de la demande de brevet française FR 2 875 454, une tablette arrière pour véhicule automobile, du type comprenant un panneau de masquage du chargement du coffre arrière dudit véhicule et comprenant :
- une partie rigide s'étendant d'un bord arrière jusqu'à un bord avant le long d'une direction longitudinale et le long d'une direction transversale du véhicule dans la position de couverture de ce panneau, cette partie rigide étant déplaçable à coulissement sur des moyens de guidage sur toute la longueur du coffre, et
- un rideau prolongateur pouvant être déroulé dans le prolongement de la partie rigide ou rangé dans cette dernière au moyen d'un dispositif d'enroulement/déroulement.

Lorsque le rideau est rangé dans la partie rigide, cette dernière est apte à être déplacée par coulissement sur lesdits moyens de guidage et sur des moyens de guidages complémentaires entre une position de couverture d'une partie du chargement du coffre et une position escamotée sensiblement verticale dans un compartiment de rangement du panneau le long des dossiers de la banquette arrière.

Dans cette position escamotée de la tablette, l'utilisateur peut ainsi accéder à l'intégralité du volume nominal du coffre arrière du véhicule.

Cette position escamotée n'est toutefois pas adaptée à une utilisation du véhicule dans une configuration où les dossiers de la banquette arrière ont été rabattus à l'horizontale pour augmenter le volume de chargement du véhicule.

En effet, dans une telle configuration, la tablette formerait une cloison verticale de démarcation empêchant le chargement d'objets allongés tels que par exemple des cartons d'emballage de meubles à monter.

La publication CH 295 870 A divulgue une tablette arrière d'après le préambule de la revendication 1.

### Objet et résumé de l'invention

La présente invention vise donc à proposer une tablette arrière de masquage présentant une meilleure ergonomie d'utilisation.

Elle propose à cet effet une tablette arrière pour véhicule automobile comprenant au moins un panneau de masquage du chargement du coffre arrière dudit véhicule ;
comportant en outre un arceau rigide en forme de U comprenant deux montants latéraux opposés parallèles et une traverse reliant les deux extrémités arrière desdits montants, ledit arceau étant destiné à être monté pivotant autour d'un axe transversal sur les flancs latéraux de la partie arrière dudit véhicule,
chaque dit panneau étant apte à être monté à pivotement autour d'un axe transversal sur un dossier correspondant de banquette arrière dudit véhicule entre une position déployée dans laquelle il s'étend sensiblement selon le plan moyen dudit arceau en reposant partiellement sur ce dernier, et une position repliée dans laquelle il est plaqué contre la face arrière dudit dossier,
caractérisée en ce que chaque dit panneau (30, 40) comporte une partie principale rigide (31, 41) et une partie souple formant charnière (35, 45) prolongeant longitudinalement ladite partie rigide (31, 41) et destinée à être fixée par son extrémité opposée à ladite partie rigide à la face arrière dudit dossier (7, 8).

De par sa conception, la tablette selon l'invention permet, selon les besoins des utilisateurs et sans qu'il n'y ait besoin de la démonter, soit de recouvrir et dissimuler le chargement contenu dans le coffre du véhicule lorsque le ou les panneaux sont déployés, soit de permettre d'augmenter le volume de chargement de ce coffre lorsque ce ou ces mêmes panneaux sont repliés contre le ou les dossiers correspondants.

En outre, dans cette position repliée du ou des panneaux, le ou les dossiers correspondants peuvent être rabattus vers l'avant à l'horizontale afin d'augmenter le volume de chargement du véhicule sans que ces panneaux ne constituent une gêne (ces derniers faisant alors office de support plan pour les objets mis en place dans cette extension du coffre).

Selon des caractéristiques préférées de la tablette, prises seules ou en combinaison :
- la partie principale rigide de chaque dit panneau comporte une plaque rigide recouverte sur sa face supérieure par une moquette ;
- ladite plaque rigide est réalisée dans un matériau composite formé de deux peaux minces rigides prenant en sandwich une âme alvéolaire ;
- lesdites peaux minces de la plaque rigide sont constituées d'une base en résine thermodurcissable renforcée par des fibres de lin ;
- ladite plaque rigide présente une épaisseur inférieure à 10 mm ;
- dans ladite position déployée, l'extrémité libre opposée à ladite partie souple de chaque dit panneau repose sur une nervure ménagée sur la traverse dudit arceau ;
- chaque dit panneau comporte des moyens de maintien amovible aptes à coopérer avec des moyens complémentaires ménagés sur ledit arceau et sur ledit dossier correspondant pour assurer la retenue dudit panneau dans l'une de ses positions déployée et repliée ; et/ou
- lesdits moyens de maintien amovible comportent, pour chaque dit panneau, un couple de sangles solidaires de ce panneau et présentant à leurs extrémités libres des moyens d'attache complémentaires permettant de les relier temporairement pour former une boucle fermée apte à traverser suivant la position dudit panneau une fente ménagée dans ledit arceau ou bien une fente ménagée en partie inférieure dudit dossier correspondant.

L'invention vise également sous un second aspect, un véhicule automobile comportant une banquette arrière dotée d'au moins un dossier rabattable vers l'avant et une dite tablette comprenant pour chaque dit dossier un panneau monté à pivotement autour d'un axe transversal sur ledit dossier entre une position déployée dans laquelle il s'étend sensiblement selon le plan moyen dudit arceau en reposant partiellement sur ce dernier, et une position repliée dans laquelle il est plaqué contre la face arrière du dossier correspondant.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 1 est une vue partielle en perspective de la partie arrière d'un véhicule automobile équipée d'un hayon de coffre montré en position ouverte et d'une tablette conforme à l'invention dont les deux panneaux occupent leur position déployée ;
- la figure 2 représente une vue en coupe longitudinale de la tablette selon l'invention dans la configuration de la figure 1 ;
- la figure 3 est une représentation en perspective sous un autre angle des dossiers de banquette arrière et de la tablette selon l'invention dans la configuration de la figure 1 ;
- la figure 4 représente une vue similaire à la figure 3 mais sur laquelle l'un des deux panneaux de la tablette est en position repliée contre le dossier correspondant de la banquette arrière ;
- la figure 5 est une vue similaire à la figure 3 sous un autre angle et sur laquelle l'un des deux panneaux de la tablette est en position repliée contre le dossier correspondant de la banquette arrière lui-même rabattu vers l'avant à l'horizontale ; et
- la figure 6 représente une vue semblable à la figure 1 mais prise de dos et sur laquelle les deux panneaux de la tablette sont en position repliée contre les dossiers correspondant de la banquette arrière.

### Description détaillée d'un mode préféré de réalisation

Dans la description qui va suivre et par convention, les termes « avant », « arrière », « haut », « bas », « longitudinal » et « transversal » seront définis par au sens de marche normal d'un véhicule automobile.

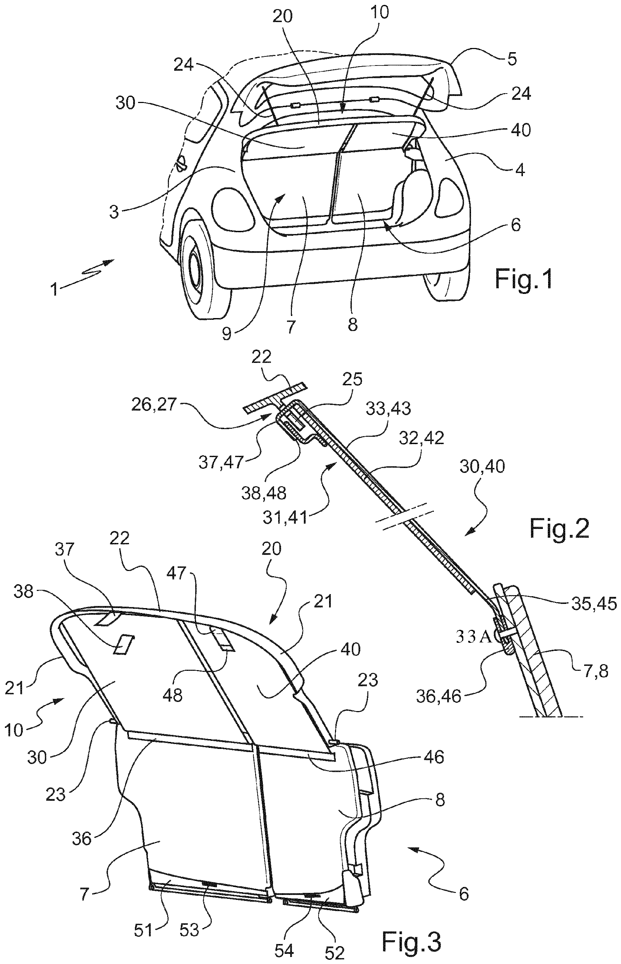

La figure 1 représente la partie arrière 1 d'un véhicule automobile comportant classiquement :
- un plancher non visible sur cette figure ;
- deux flancs latéraux, à savoir un flanc gauche 3 et un flanc droit 4 ;
- un hayon 5, appelé aussi volet arrière, monté à pivotement autour d'un axe transversal entre une position relevée d'ouverture et une position abaissée de fermeture ;
- une banquette 6 de sièges arrière comprenant notamment deux dossiers 7, 8 disposés côte à côte dans le sens de la largeur du véhicule et aptes à être rabattus vers l'avant de manière indépendante ; et
- un coffre ou compartiment à bagages 9 délimité notamment par le plancher, les deux flancs latéraux 3, 4, le hayon 5 et les dossiers 7, 8 de la banquette arrière 6.

La partie arrière 1 du véhicule comprend également, à l'arrière des dossiers 7, 8, une tablette arrière 10 de masquage d'un chargement disposé dans le coffre 9.

On va maintenant décrire plus en détails cette tablette arrière 10 à l'appui des figures 2 à 5.

Celle-ci comporte un arceau rigide en forme de U 20 et deux panneaux 30, 40 de masquage du chargement du coffre 9.

L'arceau 20, avantageusement venu d'une pièce par moulage à partir d'un matériau thermoplastique ou métallique tel que l'aluminium, comprend deux montants latéraux opposés parallèles 21 et une traverse de plus grande longueur 22 reliant les deux extrémités arrière de ces montants 21.

Cet arceau 20 est monté pivotant autour d'un axe transversal sur la structure du véhicule par l'intermédiaire de deux doigts 23 saillant transversalement vers l'extérieur depuis les extrémités avant de ses deux montants latéraux 21 et montés articulés sur deux paliers (non visibles sur les figures) ménagés sur les flancs latéraux 3, 4 de la partie arrière 1 du véhicule.

Deux cordons souples 24, appelés limiteurs de débattement, relient les deux montants latéraux 21 à deux points d'attache latéraux prévus sur le hayon 5, de sorte à synchroniser le pivotement de l'arceau 20 avec le déplacement du hayon 5.

Ainsi, lors de l'ouverture de ce hayon 5, l'arceau 20 est automatiquement entraîné à pivotement vers le haut jusqu'à une position relevée oblique facilitant l'accès au coffre 9 (figures 1 à 6).

Comme illustré sur la figure 2, la traverse 22 comprend une nervure 25 saillant vers l'avant sensiblement selon le plan moyen de l'arceau 20 et destinée, comme cela sera explicité plus en détails dans la suite de cette description, à supporter les extrémités arrière des deux panneaux 30, 40.

Les deux panneaux 30, 40 sont reliés chacun à un dossier 7, 8 respectif de la banquette arrière 6 et s'étendent transversalement, sensiblement sur toute la largeur de ce dossier 7, 8,

Chaque panneau 30, 40 est formé de deux parties : une partie principale rigide 31, 41 et une partie souple formant charnière 35, 45 prolongeant longitudinalement cette partie rigide 31, 41 jusqu'à la partie supérieure d'un dossier correspondant 7, 8 à laquelle elle est fixée.

La partie principale 31, 41 est constituée par une plaque rigide 32, 42 recouverte sur sa face supérieure par une moquette 33, 43.

La plaque rigide 32, 42 est réalisée de préférence dans un matériau composite léger formé de deux peaux minces rigides (par exemple en polyuréthane, en polypropylène, en polyéthylène ou en résine thermodurcissable) prenant en sandwich une âme alvéolaire (par exemple en carton, en polystyrène, en plastique ou en mousse PET), tel que le FLAXPREG® (peaux constituées d'une base en résine thermodurcissable par exemple de type époxy ou acrylique renforcée par des fibres de lin et présentant d'excellentes propriétés de résistance mécanique en flexion et en torsion pour une masse réduite), le BAYPREG® ou encore le SOMMOLD® (peaux constituées d'une base en polyuréthane renforcée en fibres de verre).

Cette plaque rigide 32, 42 présente en outre avantageusement une épaisseur inférieure à 10 mm et de préférence comprise entre 6 et 8 mm, de sorte à limiter l'épaisseur globale de la partie principale 31, 41 des panneaux 30, 40.

La partie souple formant charnière 35, 45, constituée par un prolongement de la moquette 33, 43, est fixée par son extrémité 33A opposée à la partie principale 31, 41 sur la face arrière de la partie supérieure du dossier correspondant 7, 8.

Plus précisément et comme on peut le voir sur la figure 2, cette fixation est réalisée par l'intermédiaire d'une réglette transversale plastique ou métallique 36, 46 dans laquelle est insérée l'extrémité opposée à la partie principale 31, 41 de la partie souple 35, 45, et qui est vissée ou rivetée sur la face arrière d'un dossier respectif 7, 8.

En variante, cette fixation peut être réalisée de manière différente, par exemple par une simple ligne de couture transversale.

Chaque panneau 30, 40 est ainsi monté à pivotement sur un dossier correspondant 7, 8 autour d'un axe transversal entre une position déployée dans laquelle il s'étend sensiblement selon le plan moyen de l'arceau 20 avec son extrémité libre opposée à la partie souple 35, 45 qui repose sur la nervure 25 de cet arceau 20, et une position repliée dans laquelle il est plaqué contre la face arrière du dossier correspondant 7, 8.

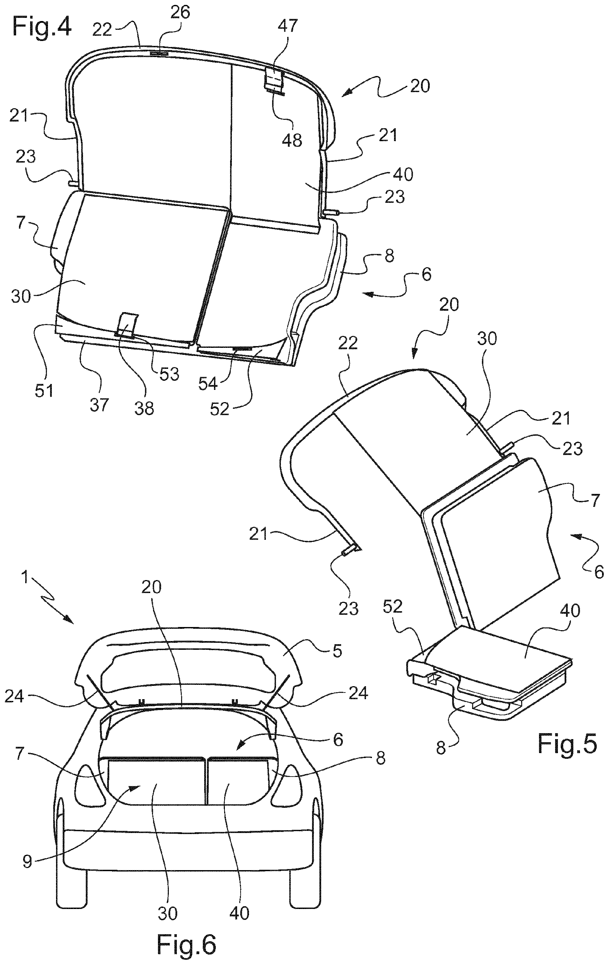

Comme illustré sur les figures 3 et 4, la partie inférieure de la face arrière de chaque dossier 7, 8 comporte une rampe inclinée de rattrapage d'épaisseur respective 51, 52 positionnée de manière à se trouver contre l'extrémité libre d'un panneau correspondant 30, 40 lorsque ce dernier vient occuper sa position repliée.

La présence de cette rampe de rattrapage 51, 52 permet ainsi d'éviter, lors de la mise en place de charges lourdes dans le coffre 9 alors que le dossier 7, 8 est rabattu à l'horizontale (tel qu'illustré sur la figure 5 avec le dossier 8), que ces dernières ne viennent buter contre le bord libre du panneau correspondant 30, 40.

Ces rampes de rattrapage 51, 52 sont en l'espèce venus de moulage en matière plastique et rapportées sur la face arrière des dossiers 7, 8.

En variante, ces dernières peuvent être réalisées de manière différente et notamment par emboutissage de la tôle formant le dos de chaque dossier 7, 8.

Chaque panneau 30, 40 comporte en outre des moyens de maintien amovible aptes à coopérer avec des moyens complémentaires ménagés sur la nervure 25 de l'arceau 20 et en partie inférieure du dossier correspondant 7, 8 pour assurer la retenue de ce panneau dans l'une de ses positions déployée et repliée.

Ces moyens de maintien comprennent, pour chacun des panneaux 30, 40, une première sangle 37, 47 solidaire par l'une de ses extrémités du bord libre du panneau 30, 40 et une seconde sangle 38, 48 fixée par l'une de ses extrémités sur la face inférieure de ce panneau 30, 40, à proximité de ce bord libre.

Ces sangles sont avantageusement réalisées dans le même matériau que celui formant les moquettes 33, 43.

De préférence, chaque première sangle 37, 47 est venue d'une seule pièce par découpe avec la moquette correspondante 33, 43, tandis que chaque seconde sangle 38, 48 est cousue sur cette même moquette 33, 43.

Les sangles 37, 47 et 38, 48 présentent en outre à leurs extrémités libres des moyens d'attache complémentaires (non représentés sur les figures et par exemple de type boucles/crochets ou bouton pression) permettant de les relier temporairement pour former une boucle fermée.

L'une au moins des deux sangles de chaque paire 37, 38 et 47, 48 est en outre apte, en fonction de la position déployée ou repliée du panneau 30, 40, à être insérer au travers d'une fente correspondante 26, 27 ménagée dans la nervure 25 de l'arceau 20 ou bien d'une fente correspondante 53, 54 ménagée dans une rampe de rattrapage respective 51, 52, de sorte qu'après attache des extrémités libres de ces sangles et formation de la boucle, le panneau 30, 40 soit retenu dans la position qu'il occupe (figure 2).

On va maintenant décrire rapidement le fonctionnement de la tablette à l'appui des figures.

La figure 1 montre la partie arrière du véhicule dans une configuration où son hayon 5 est ouvert avec l'arceau 20 relevé et les deux panneaux 30, 40 qui occupent leur position déployée dans laquelle ils s'étendent côte à côte sensiblement selon le plan moyen de cet arceau 20 avec leurs extrémités libres qui reposent sur la nervure 25.

Depuis cette configuration, l'utilisateur souhaitant bénéficier d'une plus grande ouverture de chargement du coffre 9 pour permettre la mise en place d'objets présentant une hauteur importante (cartons, meubles, etc...), doit alors faire passer au moins l'un des panneaux 30, 40 en position repliée contre le dossier correspondant 7, 8.

Pour ce faire, cet utilisateur doit tout d'abord détacher les deux sangles du panneau correspondant de sorte à le libérer de l'arceau 20, tel qu'illustré sur la figure 3 avec le panneau 30 et les sangles 37, 38.

Il lui suffit alors d'agripper la seconde sangle puis de tirer en direction du dossier correspondant pour entrainer le repli de la partie souple du panneau et l'avancée de sa partie rigide, de sorte que son extrémité libre ne repose plus sur la nervure 25.

N'étant plus retenu, le panneau va alors être entrainé par sa masse à pivotement vers le bas.

Pour plaquer ce panneau contre le dossier correspondant, l'utilisateur doit alors agripper sa seconde sangle pour la faire passer au travers de la fente ménagée dans la rampe de rattrapage de ce dossier, puis attacher son extrémité libre à celle de la première sangle de sorte à former une boucle fermée assurant la retenue du panneau dans sa position repliée tel qu'illustré sur la figure 4 avec le panneau 30.

La figure 6 montre la partie arrière du véhicule dans une configuration où son hayon 5 est ouvert avec l'arceau 20 relevé et les deux panneaux 30, 40 qui occupent leur position repliée contre les dossiers 7, 8, de sorte à bénéficier d'une ouverture de chargement maximale.

On notera en outre, à l'appui de la figure 5, qu'en position repliée du ou des panneaux 30, 40, le ou les dossiers correspondants 7, 8 peuvent être rabattus vers l'avant à l'horizontale afin d'augmenter le volume de chargement du véhicule sans que ces panneaux ne constituent une gêne (ces derniers faisant alors office de support plan pour les objets mis en place dans cette extension du coffre 9.

Pour ramener chaque panneau en position déployée, l'utilisateur doit tout d'abord détacher les deux sangles de ce panneau de sorte à le libérer de la rampe de rattrapage correspondante.

Il lui suffit alors d'agripper la première sangle puis de tirer vers l'arrière pour entrainer le panneau à pivotement vers le haut.

L'utilisateur doit ensuite faire passer ce panneau au travers de l'arceau 20 en repliant sa partie souple, puis faire passer sa seconde sangle au travers de la fente correspondante ménagée dans la nervure 25 de l'arceau 20 et enfin attacher les deux extrémités libres des sangles de sorte à former une boucle retenant le panneau dont l'extrémité libre vient reposer contre cette nervure 25.

Selon des variantes de réalisation non représentées, les moyens de maintien permettant d'assurer la retenue des panneaux dans leur position déployée ou repliée sont différents.

Selon d'autres variantes de réalisation non représentées, le nombre de panneaux que comporte la tablette est également différent pour s'adapter à la configuration de la banquette arrière.

Ainsi, dans le cas d'une banquette présentant un dossier monobloc s'étendant sur toute la largeur du véhicule, la tablette comprendra un unique panneau lié à ce dossier couvrant l'intégralité de l'arceau.

A l'inverse, dans le cas d'une banquette dotée de trois dossiers disposés côte à côte sur la largeur du véhicule, la tablette comprendra trois panneaux liés chacun à un dossier correspondant.

D'une manière générale, on rappelle que la présente invention ne se limite pas aux formes de réalisation décrites et représentées, mais qu'elle englobe toute variante d'exécution à la portée de l'homme du métier.

## Revendications

1. Tablette arrière pour véhicule automobile comprenant au moins un panneau de masquage (30, 40) du chargement du coffre arrière (9) dudit véhicule ; comportant en outre un arceau rigide (20) en forme de U comprenant deux montants latéraux opposés parallèles (21) et une traverse (22) reliant les deux extrémités arrière desdits montants (21), ledit arceau (20) étant destiné à être monté pivotant autour d'un axe transversal sur les flancs latéraux (2, 3) de la partie arrière (1) dudit véhicule, chaque dit panneau (30, 40) étant apte à être monté à pivotement autour d'un axe transversal sur un dossier correspondant (7, 8) de banquette arrière (6) dudit véhicule entre une position déployée dans laquelle il s'étend sensiblement selon le plan moyen dudit arceau (20) en reposant partiellement sur ce dernier, et une position repliée dans laquelle il est plaqué contre la face arrière dudit dossier (7, 8), **caractérisée en ce que** chaque dit panneau (30, 40) comporte une partie principale rigide (31, 41) et une partie souple formant charnière (35, 45) prolongeant longitudinalement ladite partie rigide (31, 41) et destinée à être fixée par son extrémité opposée à ladite partie rigide à la face arrière dudit dossier (7, 8).

2. Tablette arrière selon la revendication 1, **caractérisée en ce que** la partie principale rigide (31, 41) de chaque dit panneau (30, 40) comporte une plaque rigide (32, 42) recouverte sur sa face supérieure par une moquette (33, 43).

3. Tablette arrière selon la revendication 2, **caractérisée en ce que** ladite plaque rigide (32, 42) est réalisée dans un matériau composite formé de deux peaux minces rigides prenant en sandwich une âme alvéolaire.

4. Tablette arrière selon la revendication 3, **caractérisée en ce que** lesdites peaux minces de la plaque rigide (32, 42) sont constituées d'une base en résine thermodurcissable renforcée par des fibres de lin.

5. Tablette arrière selon l'une des revendications 2 à 4, **caractérisée en ce que** ladite plaque rigide présente une épaisseur inférieure à 10 mm.

6. Tablette arrière selon l'une des revendications 1 à 5, **caractérisée en ce que**, dans ladite position déployée, l'extrémité libre opposée à ladite partie souple (35, 45) de chaque dit panneau (30, 40) repose sur une nervure (25) ménagée sur la traverse (22) dudit arceau (20).

7. Tablette arrière selon l'une des revendications 1 à 6, **caractérisée en ce que** chaque dit panneau (30, 40) comporte des moyens de maintien amovible (37, 38, 47, 48) aptes à coopérer avec des moyens complémentaires (26, 27, 53, 54) ménagés sur ledit arceau (20) et sur ledit dossier correspondant (7, 8) pour assurer la retenue dudit panneau (30, 40) dans l'une de ses positions déployée et repliée.

8. Tablette arrière selon la revendication 7, **caractérisée en ce que** lesdits moyens de maintien amovible comportent, pour chaque dit panneau (30, 40), un couple de sangles (37, 38, 47, 48) solidaires de ce panneau (30, 40) et présentant à leurs extrémités libres des moyens d'attache complémentaires permettant de les relier temporairement pour former une boucle fermée apte à traverser suivant la position dudit panneau (30, 40) une fente (26, 27) ménagée dans ledit arceau (20) ou bien une fente (53, 54) ménagée en partie inférieure dudit dossier correspondant (7, 8).

9. Véhicule automobile comportant une banquette arrière (6) dotée d'au moins un dossier (30, 40) rabattable vers l'avant et une tablette (10) selon l'une des revendications précédentes, ladite tablette comprenant pour chaque dit dossier (7, 8) un panneau (30, 40) monté à pivotement autour d'un axe transversal sur ledit dossier (7, 8) entre une position déployée dans laquelle il s'étend sensiblement selon le plan moyen dudit arceau (20) en reposant partiellement sur ce dernier, et une position repliée dans laquelle il est plaqué contre la face arrière du dossier correspondant (7, 8).

## Patentansprüche

1. Hinteres Tablett für Kraftfahrzeug, das mindestens eine Maskierungsplatte (30, 40) der Ladung des Heckkofferraums (9) des Fahrzeugs umfasst; weiter einen starren Bügel (20) in U-Form umfasst, der zwei parallele entgegengesetzte seitliche Ständer (21) und einen Querträger (22) umfasst, der die zwei hinteren Enden der Ständer (21) verbindet, wobei der Bügel (20) dazu bestimmt ist, um eine Querachse auf den Seitenflanken (2, 3) des hinteren Teils (1) des Fahrzeugs schwenkend montiert zu sein, wobei jede Platte (30, 40) geeignet ist, schwenkend um eine Querachse auf einer entsprechenden Rückenlehne (7, 8) der Rücksitzbank (6) des Fahrzeugs zwischen einer ausgefahrenen Position, in der sie sich im Wesentlichen entlang der Mittenebene des Bügels (20) erstreckt, indem sie teilweise auf diesem Letzteren ruht, und einer zurückgezogenen Position, in der sie gegen die hintere Fläche der Rückenlehne (7, 8) gedrückt ist, montiert zu sein, **dadurch gekennzeichnet, dass** jede Platte (30, 40) einen starren Hauptteil (31, 41) und einen biegsamen Teil umfasst, der ein Scharnier (35, 45) bildet, das den starren Teil (31, 41) längs verlängert und dazu bestimmt ist, an seinem entgegengesetzten Ende an dem starren Teil an der hinteren Fläche der Rückenlehne (7, 8) befestigt zu sein.

2. Hinteres Tablett nach Anspruch 1, **dadurch gekennzeichnet, dass** der starre Hauptteil (31, 41) jeder Platte (30, 40) eine starre Tafel (32, 42) umfasst, die auf ihrer oberen Fläche mit einem Teppichboden (33, 43) abgedeckt ist.

3. Hinteres Tablett nach Anspruch 2, **dadurch gekennzeichnet, dass** die starre Tafel (32, 42) aus einem Verbundmaterial hergestellt ist, das aus zwei dünnen starren Häuten, die eine zellenförmigen Seele einschließen, gebildet ist.

4. Hinteres Tablett nach Anspruch 3, **dadurch gekennzeichnet, dass** die dünnen Häute der starren Tafel (32, 42) auf einer Basis aus wärmehärtbarem Harz, das durch Leinenfasern verstärkt ist, gebildet sind.

5. Hinteres Tablett nach einem der Ansprüche 2 bis 4, **dadurch gekennzeichnet, dass** die starre Tafel eine Stärke kleiner als 10 mm aufweist.

6. Hinteres Tablett nach einem der Ansprüche 1 bis 5, **dadurch gekennzeichnet, dass** das freie Ende, das dem biegsamen Teil (35, 45) jeder Platte (30, 40) entgegengesetzt ist, in der ausgefahrenen Position auf einer Rippe (25) ruht, die auf dem Querträger (22) des Bügels (20) eingerichtet ist.

7. Hinteres Tablett nach einem der Ansprüche 1 bis 6, **dadurch gekennzeichnet, dass** jede Platte (30, 40) abnehmbare Vorrichtungen zum Festhalten (37, 38, 47, 48) umfasst, die geeignet sind, um mit komplementären Mitteln (26, 27, 53, 54), die auf dem Bügel (20) und auf der entsprechenden Rückenlehne (7, 8) eingerichtet sind, zusammenzuwirken, um das Zurückhalten der Platte (30, 40) in einer ihrer ausgefahrenen und zurückgezogenen Position sicherzustellen.

8. Hinteres Tablett nach Anspruch 7, **dadurch gekennzeichnet, dass** die abnehmbaren Vorrichtungen zum Festhalten für jede der Platten (30, 40) ein Paar von Gurten (37, 38, 47, 48) umfassen, die fest mit dieser Platte (30, 40) verbunden sind und an ihren freien Enden komplementäre Anbringungsmittel aufweisen, die es erlauben, sie vorübergehend zu verbinden, um eine geschlossene Schleife zu bilden, die gemäß der Position der Platte (30, 40) einen Spalt (26, 27), der in dem Bügel (20) eingerichtet ist, oder ansonsten einen Spalt (53, 54), der im unteren Teil der entsprechenden Rückenlehne (7, 8) eingerichtet ist, durchqueren kann.

9. Kraftfahrzeug, das eine Rücksitzbank (6) umfasst, die mit mindestens einer nach vorn klappbaren Rückenlehne (30, 40) und einem Tablett (10) nach einem der vorstehenden Ansprüche versehen ist, wobei das Tablett für jede Rückenlehne (7, 8) eine Platte (30, 40) umfasst, die schwenkend um eine Querachse auf der Rückenlehne (7, 8) zwischen einer ausgefahrenen Position, in der sie sich im Wesentlichen entlang der Mittenebene des Bügels (20) erstreckt, indem sie teilweise auf diesem Letzteren ruht, und einer zurückgezogenen Position, in der sie gegen die hintere Fläche der entsprechenden Rückenlehne (7, 8) gedrückt ist, montiert ist.

## Claims

1. Rear shelf for motor vehicle comprising at least one masking panel (30, 40) of the loading area of the rear boot (9) of said vehicle; further comprising a rigid arch (20) in the shape of a U comprising two opposite parallel lateral uprights (21) and a crosspiece (22) connecting the two rear ends of said uprights (21), said arch (20) being intended to be pivotably mounted about a transversal axis on the side flanks (2, 3) of the rear portion (1) of said vehicle, with each said panel (30, 40) able to be mounted pivotably about a transversal axis on a corresponding seatback (7, 8) of the rear seat (6) of said vehicle between a deployed position wherein it extends substantially according to the mean plane of said arch (20) by resting partially on the latter, and a folded position wherein it is thrust against the rear face of said seatback (7, 8), **characterised in that** each said panel (30, 40) comprises a main rigid portion (31, 41) and a flexible portion forming a hinge (35, 45) that longitudinally extends said rigid portion (31, 41) and intended to be fastened by its opposite end to the rear face of said seatback (7, 8).

2. Rear shelf according to claim 1, **characterised in that** the main rigid portion (31, 41) of each said panel (30, 40) comprises a rigid plate (32, 42) covered on its upper face by a carpet (33, 43).

3. Rear shelf according to claim 2, **characterised in that** said rigid plate (32, 42) is made from a composite material formed from two rigid thin skins that sandwich a honeycomb core in between.

4. Rear shelf according to claim 3, **characterised in that** said thin skins of the rigid plate (32, 42) are formed from a base made of thermosetting resin reinforced with flax fibres.

5. Rear shelf according to one of claims 2 to 4, **characterised in that** said rigid plate has a thickness less than 10 mm.

6. Rear shelf according to one of claims 1 to 5, **characterised in that**, in said deployed position, the free end opposite said flexible portion (35, 45) of each said panel (30, 40) rests on a rib (25) arranged on the crosspiece (22) of said arch (20).

7. Rear shelf according to one of claims 1 to 6, **characterised in that** each said panel (30, 40) comprises removable means for maintaining (37, 38, 47, 48) able to cooperate with complementary means (26, 27, 53, 54) arranged on said arch (20) and on said corresponding seatback (7, 8) in order to ensure the retaining of said panel (30, 40) in one of its deployed and folded positions.

8. Rear shelf according to claim 7, **characterised in that** said removable means for maintaining comprise, for each said panel (30, 40), a pair of straps (37, 38, 47, 48) integral with this panel (30, 40) and have at their free ends complementary means for fastening that make it possible to connect them temporarily in order to form a closed bucked able to pass through according to the position of said panel (30, 40) a slot (26, 27) arranged in said arch (20) or a slot (53,54) arranged in the lower portion of said corresponding seatback (7, 8).

9. Motor vehicle comprising a rear seat (6) provided with at least one seatback (30, 40) that can be folded back towards the front and a shelf (10) according to one of the preceding claims, said shelf comprising for each said seatback (7, 8) a panel (30, 40) pivotably mounted about a transversal axis on said seatback (7, 8) between a deployed position wherein it extends substantially according to the mean plane of said arch (20) by resting partially on the latter, and a folded position wherein it is thrust against the rear face of the corresponding seatback (7, 8).
